# EUROPEAN PATENT APPLICATION

(11) **EP 4 832 310 A1**
(43) Date of publication of application: **28.10.2026**
(21) Application number: 23962119.6
(22) Date of filing: 18.12.2023
(51) Int. Cl.: H02K 1/276

(54) **ROTOR, ROTARY ELECTRIC MACHINE, AND METHOD FOR MANUFACTURING ROTOR**

(71) Applicant: KABUSHIKI KAISHA TOSHIBA, Minato-ku Tokyo 105-0023 (JP)
(72) Inventor: MATSUBARA, Masakatsu, Kawasaki-shi, Kanagawa 212-0013 (JP); MAKINO, Hiroaki, Kawasaki-shi, Kanagawa 212-0013 (JP)
(74) Representative: AWA Sweden AB
(86) International application number: PCT/JP2023/045297
(87) International publication number: WO 2025/134194

(57) **Abstract**

A permanent magnet rotor and a permanent magnet motor capable of reducing the coercive force of the permanent magnet without decrease in torque are provided. According to an embodiment, the rotor 100 includes a rotor shaft 110, first magnets 131 symmetrical about d-axis, second magnets 133 arranged inward of the first magnet 131, and a rotor core on the rotor shaft 110 including magnetic poles arranged equidistantly in the circumferential direction. Each magnetic pole has a flux barrier band substantially convex toward the rotation center axis, connecting one with other of the outer peripheral surface and including a region housing the permanent magnet, a non-magnetic region, and a bridge. The rotor core has a non-magnetic region connecting the surface with the permanent magnet. The thickness of the second magnet is greater than that of the first magnet, and the angle between the second magnets is larger than that between the first magnets.

## Description

### [Technical Field]

Embodiments of the present invention relate to a rotor, a rotary electric machine, and manufacturing method of the rotor.

### [Background Art]

In an interior permanent magnet rotor, in many cases, each magnetic pole is symmetric in the circumferential direction with respect to the d-axis at the center of the magnetic pole. Also, to ensure a magnetic path that aligns with the magnetic flux generated by the stator windings, in each magnetic pole, a rotor core, in which a flux barrier band formed convexly toward the radial inner side is constructed from non-magnetic regions and bridges, is often used. The permanent magnets are housed in these non-magnetic regions.

In a flux barrier band, the bridge also functions as a structural member that resists the centrifugal force applied to the outer region of the flux barrier band of the permanent magnet rotor during rotation. In this case, providing bridges on both sides across the d-axis is structurally more advantageous than providing a single bridge on the d-axis.

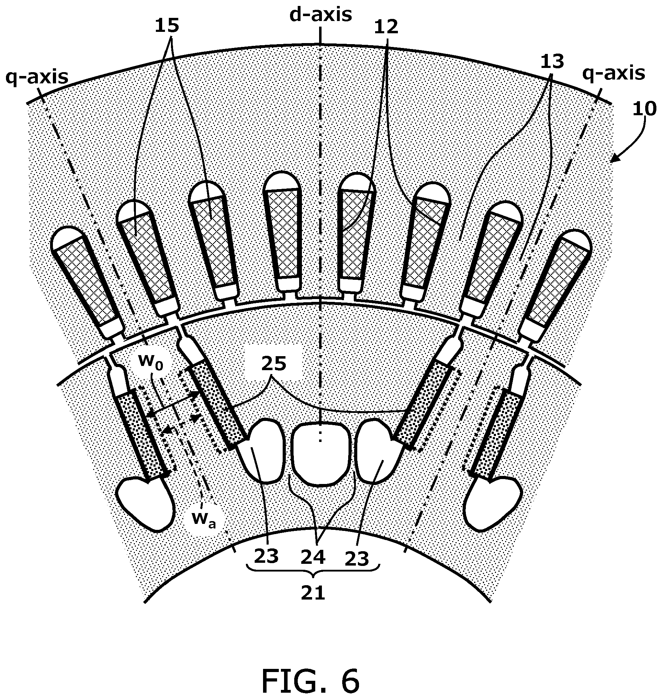

Figure 6 is a partial cross-sectional view showing a conventional example of a rotary electric machine. Figure 6 illustrates one magnetic pole with permanent magnets 25 arranged line-symmetrically with respect to the d-axis, and a part of an adjacent magnetic pole separated by the q-axis. Each of the permanent magnets 25 is housed in each of the two magnet housing holes 23 in the flux barrier band 21.

### [Prior Art Documents]

### [Patent Literature]

Patent Document 1: Japanese Patent No. 3769943
Patent Document 2: Japanese Patent Application Laid-open No. 2001-186699
Patent Document 3: Japanese Patent No. 3938726
Patent Document 4: Japanese Patent Application Laid-open No. 2012-29351

### [Summary of Invention]

### [Problem to be Solved by the Invention]

For the torque of a permanent magnet rotor, it is necessary to consider both the magnet torque and the reluctance torque.

The radial outer side and inner side of the flux barrier band 21 form a radially inward convex magnetic path in the magnetic pole 101. The magnetic path on the radially inner side of the flux barrier band 21 has a first magnetic path (q-axis magnetic path) between adjacent permanent magnets 25, and a second magnetic path between the flux barrier band 21 and a rotor shaft, not shown, contributing to the generation of reluctance torque.

In such a situation, trying to increase the magnetic torque by increasing the thickness of the permanent magnet 25 causes such a state in which the width of the first magnetic path becomes narrower from w0 to wa. As a result, the flux flow in the q-axis magnetic path is suppressed to decrease the reluctance torque. It may not lead to an increase in torque.

Therefore, it is desirable to increase the thickness of the radially inner permanent magnet without reducing the torque, and furthermore, even partially, to reduce the coercive force of the permanent magnet.

The problem to be solved is to provide a permanent magnet rotor and a permanent magnet motor in which the coercive force of the permanent magnet can be reduced without decreasing torque.

### [Means for Solving the Problem]

To achieve the object described above, a rotor, includes: a rotor shaft extending in a direction of a rotation center axis; first magnets extending in the direction of the rotation center axis, arranged symmetrically with respect to a d-axis extending perpendicularly from the rotation center axis, and each having a rectangular cross-sectional shape in a cross-section perpendicular to the rotation center axis; second magnets arranged radially inward of the first magnet and symmetrically with respect to the d-axis, and each having a rectangular cross-sectional shape; and a rotor core attached to the radially outward of the rotor shaft and having a plurality of magnetic poles. Each magnetic pole includes a flux barrier band that connects one with other of the outer peripheral surface. The flux barrier band is formed substantially convexly toward the rotation center axis and includes a magnet-housing region in which the first magnet and the second magnet are mounted, a non-magnetic region, and a bridge. Thickness of the second magnet is greater than thickness of each first magnet, and angle formed between the second magnets is greater than angle formed between the first magnets.

### [Brief Description of Drawings]

FIG. 1 is a longitudinal sectional view showing a rotary electric machine according to an embodiment.
FIG. 2 is a partial cross-sectional view showing a rotary electric machine according to the embodiment.
FIG. 3 is a partial cross-sectional view showing a modified example of the rotary electric machine according to the embodiment.
FIG. 4 is a graph showing the influence of dimensional relationships on torque in a rotor according to the embodiment.
FIG. 5 is a flowchart showing the steps of a method for manufacturing a rotor according to the embodiment.
FIG. 6 is a partial cross-sectional view showing a conventional example of a rotary electric machine.

### [Description of Embodiments]

A rotor, a rotary electric machine, and a method for manufacturing the rotor according to an embodiment of the present invention will be described with reference to the drawings. Here, identical or similar parts are designated by the same reference numerals, and redundant descriptions are omitted.

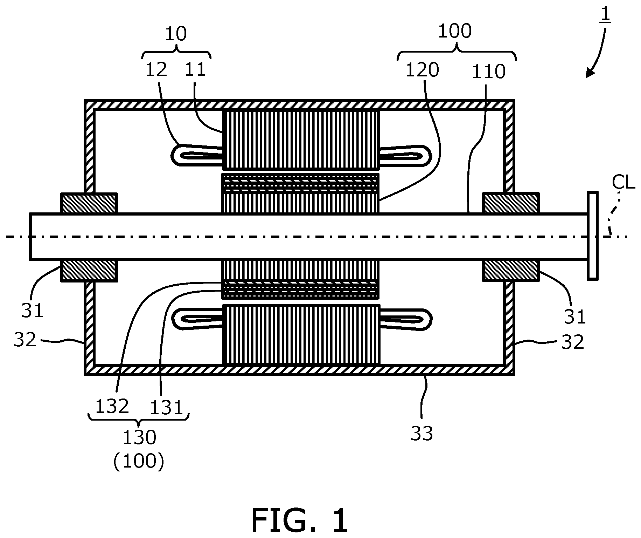

FIG. 1 is a longitudinal sectional view showing a rotary electric machine 1 according to an embodiment.

The rotary electric machine 1 includes a rotor 100, a stator 10, bearings 20 that rotatably support the rotor 100, a bearing brackets 30 each of which statically supports each bearing 20, and a frame 50 that houses the stator 10 and supports the bearing brackets 30.

The rotor 100 has a rotor shaft 110 extending in the axial direction, a rotor core 120 attached to the radially outer side of the rotor shaft 110, and permanent magnets 130 housed within the rotor core 120. Each permanent magnet 130, as shown in Figure 1, includes a first magnet 131 and a second magnet 132.

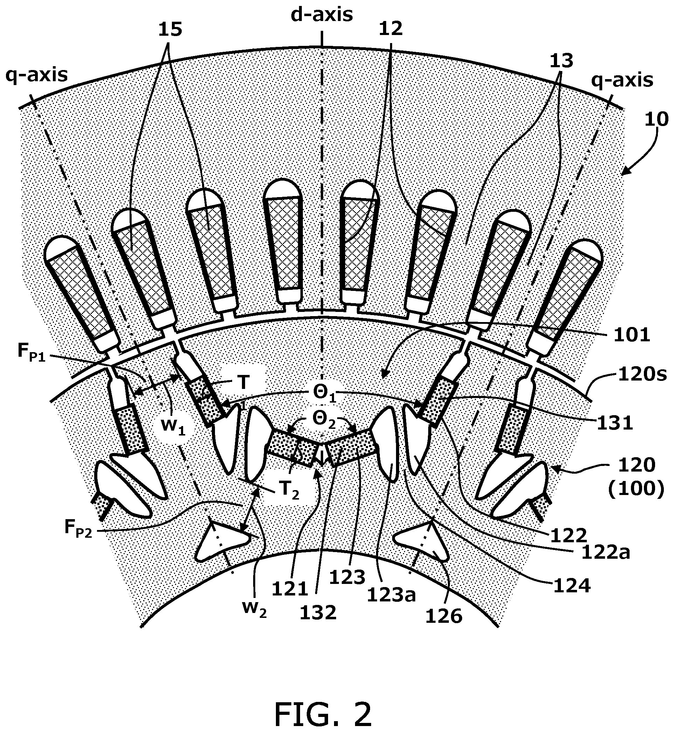

FIG. 2 is a partial cross-sectional view showing a rotary electric machine according to the embodiment.

The stator 10 includes a stator core 11 and a stator winding 15. The stator core 11 has a plurality of stator slots 12 formed at intervals in the circumferential direction and a plurality of stator teeth 13 formed by the adjacent stator slots 12. The stator winding 15 is wound around the stator teeth 13.

The rotor 100 has a plurality of magnetic poles arranged sequentially in the circumferential direction. FIG. 2 shows one magnetic pole 101 and a part of the magnetic poles on both sides adjacent to it.

Here, the magnetic pole 101 is a region sandwiched between the two q-axes extending from the rotation center axis CL. Figure 2 shows the case where the permanent magnets 130 are arranged symmetrically in the circumferential direction with respect to the d-axis which is the center of the magnetic pole 101.

Here, the permanent magnet 130 has the first magnet 131 and the second magnet 132, and these are collectively referred to as the permanent magnet 130.

In the magnetic pole 101, a pair of the first magnets 131 are arranged symmetrically with respect to the d-axis, and a pair of the second magnets 132 are arranged symmetrically with respect to the d-axis.

The first magnets 131 are arranged radially outward of the second magnets 132 with respect to the d-axis. The second magnets 132 are arranged radially inward and circumferentially inward (closer to the d-axis) of the first magnets 131. The angle Θ₂ between the second magnets 132 is greater than the angle Θ₁ between the first magnets 131.

The angle Θ₂ formed by the second magnets 132 is arranged to be greater than the angle Θ₁ formed by the first magnets 131. The pair of the first magnets 131 and the pair of the second magnets 132 are arranged so that the central part is convex toward radially inward. In other words, the configuration of a single permanent magnet in the radial direction, as in the conventional permanent magnet 25 shown in FIG. 6, is replaced with a configuration of two permanent magnets 130 each including the first magnet 131 and the second magnet 132, and while being convex toward radially inward, they are arranged in a smooth curved shape.

In the rotor core 120, a flux barrier band 121, which is formed in a roughly convex shape toward the rotation center axis CL (FIG. 1) and connects one with the other of the outer peripheral surface 120s. The flux barrier includes two first magnet housing holes 122 and two second magnet housing holes 123 which are regions for housing the first magnet 131 and the second magnet 132 respectively, a non-magnetic region, and a bridge.

Weight reduction holes 126 are formed at the boundary portions of adjacent magnetic poles 101, across the q-axis. The weight reduction holes 126 are formed for the purpose of reducing the weight of the rotor core 120 while contributing to the formation of the magnetic path, as will be described later. The approximate shape of the weight reduction holes 126 is an isosceles triangle, oriented such that the apex is on the q-axis and radially outward. That is, the two oblique sides face radially outward. In other words, the two oblique sides are arranged to face the second magnet housing hole 123.

Each of the second magnet housing holes 123 is connected to the radially inner side of each first magnet housing hole 122 while extending from the q-axis side to the d-axis side and radially inward. As a result, the two first magnet housing holes 122 and the two second magnet housing holes 123 are formed so that each center protrudes radially inward, as described above.

As a result, a first magnetic path F_{P1} is formed between the first magnet housing holes 122 of mutually adjacent magnetic poles 101 while extending radially along the q-axis across the two magnetic poles. The first magnetic path F_{P1} serves as the magnetic path for the two mutually adjacent magnetic poles 101. Here, the width of the first magnetic path F_{P1} is denoted as w₁.

Furthermore, a second magnetic path F_{P2} is formed between each of the second magnet housing hole 123 and the weight reduction hole 126. Here, the distance between the second magnet housing hole 123 and the weight reduction hole 126, that is, the shortest distance, is denoted as w₂.

The first magnetic path F_{P1} on one q-axis side, the second magnetic path F_{P2}, the second magnetic path F_{P2} symmetrical to this across the d-axis, and the first magnetic path F_{P1} on the other q-axis side form a single inner magnetic path whose center is convex toward radially inward.

This inner magnetic path functions as the magnetic path of the magnetic flux that contributes to reluctance torque.

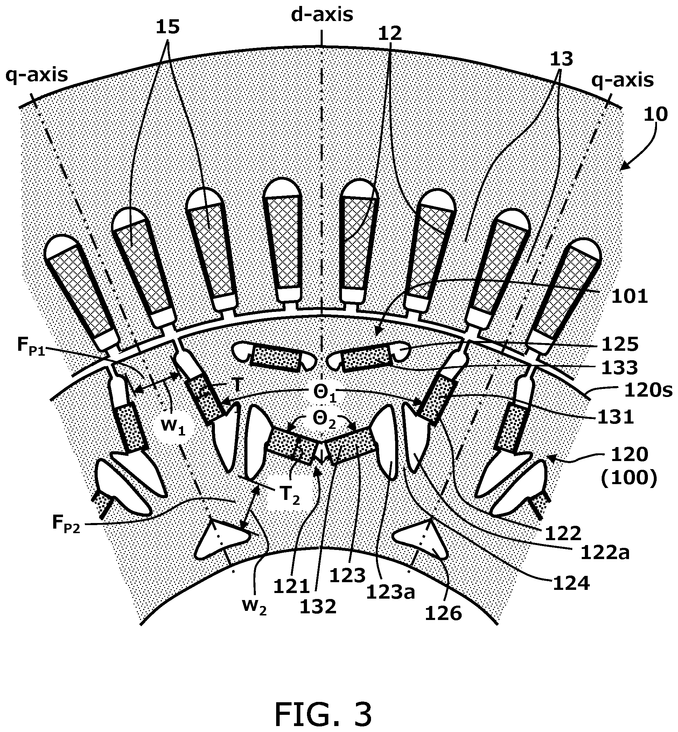

FIG. 3 is a partial cross-sectional view showing a modified example of the rotary electric machine according to the embodiment. In this modified example, on the radially outer side of the flux barrier band 121, outer magnet housing holes 125 are formed line-symmetrically with respect to the d-axis, and each of them houses an outer magnet 133. In this way, even when permanent magnets are arranged in multiple layers, the embodiment can be applied to the radially inner portion of the flux barrier band 121.

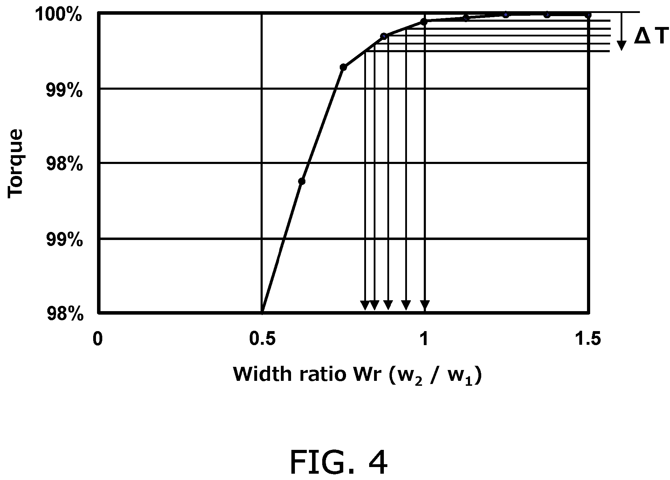

FIG. 4 is a graph showing the influence of dimensional relationships on torque in the rotor 100 according to the embodiment. The horizontal axis represents the width ratio wr (w₂ / w₁), and the vertical axis represents the relative value of torque.

Here, the width ratio wr is the ratio of the width w₂ of the second magnetic path F_{P2} to the width w₁ of the first magnetic path F_{P1}. Also, the torque on the vertical axis is the relative value (%) of the total torque, which is the sum of the magnet torque and the reluctance torque, with respect to its saturation value.

The conditions for creating the curve in this graph are as follows.
(1) When the thickness of the outer magnet 133 and the first magnet 131 is T1, and the thickness of the second magnet 132 is T2; T2 is greater than T1. In addition, the thickness ratio t of T2 to T1 is 1.4.
(2) The position of the outer magnet housing hole 125 is fixed. Also, the width of the first magnetic path F_{P1} is fixed.
(3) The direction of thickness increase when increasing the thickness of the second magnet 132 from T2 is toward radially inward. Therefore, the width of the second magnetic path F_{P2} is adjusted by changing the position of the hypotenuse of the weight reduction hole 126. Here, when changing the position of the hypotenuse, either the position of the weight reduction hole 126 is changed in the radial direction, or the size of the weight reduction hole 126 is changed.

According to the graph shown in Figure 4, the values of (w₂ / w₁) corresponding to the decrease ΔT (%) from the torque saturation value are as follows.

When the decrease ΔT(%) is 0.1%, wr is 1; when the decrease ΔT(%) is 0.2%, wr is 0.95; when the decrease ΔT(%) is 0.3%, wr is 0.9; when the decrease ΔT(%) is 0.4%, wr is 0.86; and when the decrease ΔT(%) is 0.5%, wr is 0.84.

In this way, for example, if wr is not less than 1, the decrease in torque ΔT remains not more than 0.1%, and the torque value is almost maintained.

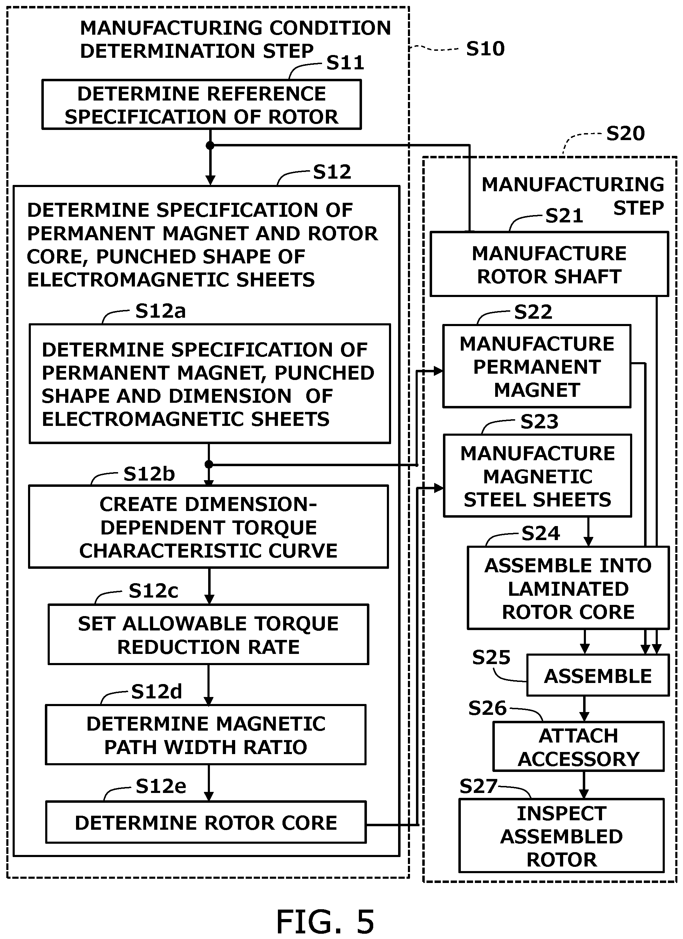

FIG. 5 is a flowchart showing the steps of a method for manufacturing the rotor 100 according to the embodiment.

The method for manufacturing the rotor 100 includes a manufacturing condition determination step S10 and a manufacturing step S20.

In the manufacturing condition determination step S10, first, the determination of the reference specifications of the rotor 100 is performed (step S11). As a result, the specifications of the rotor shaft 110, the number of permanent magnets 130, and the basic arrangement are determined.

Next, the detailed specifications of the rotor 100 are determined, that is, the permanent magnet, rotor core specifications, and the punched shape of the electromagnetic steel sheet are determined (Step S12). In Step S12, Steps S12a to S12e are carried out. Below, the details of Step S12 are described.

First, the specifications of the permanent magnet 130, and the shape and dimensions of the magnet housing hole are determined (Step S12a). The specifications of the permanent magnet 130 include the material, shape, dimensions, and installation positions of the outer magnets 133, the first magnets 131, and the second magnets 132. The shape and dimensions of the magnet housing hole correspond to each shape and dimension of the outer magnet housing hole 125, the first magnet housing hole 122, and the inner second magnet housing hole 123. Here, the thickness of the second magnet 132 is larger than the thickness of the outer magnet 133 and the first magnet 131.

Next, a dimension-dependent torque characteristic curve as shown in FIG. 4 is created (Step S12b). That is, the torque characteristic with respect to the magnetic path width ratio wr (w₂ / w₁), namely the dimension-dependent curve of torque, is created.

Next, set the allowable torque reduction rate (Step S12c).

Next, the torque dimension-dependent curve created in step S12b and the allowable torque reduction rate from step S12c are used for deriving the magnetic path width ratio wr to obtain the width w₂ of the second magnetic path F_{P2} (step S12d).

Based on the above results, the manufacturing specification of the rotor core 120 is determined (Step S12e). Here, the manufacturing specification is detailed specification including the punched shape and dimensions of the electromagnetic steel sheet.

Next, each step of the manufacturing step S20 will be explained in relation to the manufacturing condition determination step S10.

First, the rotor shaft 110 is manufactured based on the rotor reference specification obtained in step S11 (S21). The manufacturing of the rotor shaft 110 may be carried out, for example, by placing an order with a material manufacturer and then processing it after receipt.

Next, the permanent magnet 130 is manufactured based on the specification of the permanent magnet 130 determined in step S12a (step S22). Here, the manufacturing of the permanent magnet 130 may involve placing a manufacturing order with a specialized permanent magnet manufacturer or purchasing it.

Next, magnetic steel sheets for lamination are manufactured based on the specification of the rotor core 120 in step S12e (step S23), and assembly into the laminated rotor core 120 is carried out (step S24).

Next, the rotor shaft 110 acquired in step S21, the permanent magnet 130 acquired in step S22, and the rotor core 120 acquired in step S24 are assembled (step S25). And accessories such as an internal fan are attached (step S26) to obtain the rotor 100.

Furthermore, an inspection of the assembled rotor 100, which was assembled in step S26, is performed (step S27).

As described above, by changing conventional configuration with a single permanent magnet 25 in the radial direction to configuration with two permanent magnets 130, namely the first magnet 131 and the second magnet 132, and by making the angle formed between the second magnets larger than the angle formed between the first magnets, the degree of protruding toward radially inward is alleviated while allowing increase of the thickness of the second magnet 132 toward radially inward without affecting the first magnetic path F_{P1}.

Furthermore, by increasing the thickness of the second magnet 132, the magnet torque is increased, enabling the high-torque performance of the rotary electric machine 1 to be achieved. Alternatively, by maintaining the torque of the rotary electric machine 1, the rotary electric machine 1 can be made more compact. Alternatively, the coercive force Hc of the second magnet 132 can be reduced.

According to the above-described embodiment, it is possible to provide a rotor and a rotary electric machine capable of reducing the coercive force of a permanent magnet without a decrease in torque.

### [Other embodiments]

While certain embodiments have been described, these embodiments have been presented by way of example only, and are not intended to limit the scope of the inventions. Furthermore, the features of each embodiment may be combined. The embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the invention.

### [Reference Numeral List]

1...Rotary electric machine, 10...Stator, 11...Stator core, 12...Stator slot, 13...Stator tooth, 15...Stator winding, 20...Rotor, 21...Rotor core, 22...Flux barrier band, 23...Magnet housing hole, 24...Bridge, 25...Permanent magnet, 31...Bearing, 32...Bearing bracket, 33...Frame, 100...Rotor, 101...Magnetic pole, 110...Rotor shaft, 120, 120a...Rotor core, 120s...Outer peripheral surface, 121...Flux barrier band, 122...Inner magnet first housing hole, 122a...Bridge-adjacent non-magnetic part, 123...Inner magnet second housing hole, 123a...Bridge-adjacent non-magnetic part, 124...Bridge, 125...Outer magnet housing hole, 126...Weight reduction hole, 130...Permanent magnet, 131...First magnet, 131...Second magnet, 133...Outer magnet, F_{P1}...First magnetic path, F_{P2}...Second magnetic path

## Claims

1. A rotor comprising:
a rotor shaft extending in a direction of a rotation center axis;
first magnets extending in the direction of the rotation center axis, arranged symmetrically with respect to a d-axis extending perpendicularly from the rotation center axis, and each having a rectangular cross-sectional shape in a cross-section perpendicular to the rotation center axis;
second magnets arranged radially inward of the first magnet and symmetrically with respect to the d-axis, and each having a rectangular cross-sectional shape; and
a rotor core attached to the radially outward of the rotor shaft and having a plurality of magnetic poles, each magnetic pole including a flux barrier band that connects one with other of the outer peripheral surface, the flux barrier band being formed substantially convexly toward the rotation center axis and including a magnet-housing region in which the first magnet and the second magnet are mounted, a non-magnetic region, and a bridge,
wherein a thickness of the second magnet is greater than a thickness of each first magnet, and an angle formed between the second magnets is greater than an angle formed between the first magnets.

2. The rotor according to claim 1, wherein
the rotor core has a non-magnetic region that connects the first magnet with the outer peripheral surface .

3. The rotor according to claim 1 or claim 2, wherein
a weight-reduction hole is formed radially inward of an inner second magnet housing hole, the inner second magnet housing hole being a region that houses the second magnet in each of the adjacent magnetic poles in the rotor core, and
distance w₂ is greater than distance w₁ when the shortest distance between the first magnets in each of the adjacent magnetic poles is denoted as distance w₁, and the shortest distance between the weight-reducing hole and the inner second magnet housing hole is denoted as distance w₂.

4. The rotor according to claim 1 or claim 2, further comprising permanent magnets arranged in a line-symmetrical manner with respect to the d-axis, the permanent magnets being positioned on the radially outer side of the flux barrier band in the cross-section.

5. A rotary electric machine comprising:
the rotor according to claim 1 or claim 2, and
a stator disposed radially outward of the rotor core.

6. A method for manufacturing a rotor, comprising:
a standard specification determination step for determining a standard specification of the rotor;
a detailed specification determination step for determining the detailed specification of the rotor based on the standard specification; and
a manufacturing step for manufacturing the rotor based on the detailed specification,
wherein the detailed specification determination step comprises
a step of creating a dimension-dependent characteristic curve of torque;
a step of setting an allowable torque reduction rate; and
a step of determining the magnetic path width ratio based on the dimension-dependent characteristic curve and the allowable reduction rate.
